# EUROPÄISCHE PATENTSCHRIFT

(11) **EP 4 072 737 B1**
(45) Veröffentlichungstag und Bekanntmachung des Hinweises auf die Patenterteilung: **25.06.2025**
(21) Anmeldenummer: 20820349.7
(22) Anmeldetag: 01.12.2020
(51) Int. Cl.: B05B 13/06, B05B 13/02, B05B 3/02, B08B 9/093, F16C 32/06, F16C 33/10

(54) **REINIGUNGSVORRICHTUNG**
CLEANING APPARATUS
APPAREIL DE NETTOYAGE

(30) Priorität: 11.12.2019 DE 102019134040
(43) Veröffentlichungstag der Anmeldung: 19.10.2022
(73) Patentinhaber: Hammelmann GmbH, 59302 Oelde (DE)
(72) Erfinder: OBERSCHEIDT, Martin, 59320 Ennigerloh (DE); STOFFERS, Fabian, 33378 Rheda-Wiedenbrück (DE)
(74) Vertreter: Dantz, Jan Henning
(86) Internationale Anmeldenummer: PCT/EP2020/084097
(87) Internationale Veröffentlichungsnummer: WO 2021/115842

(56) Entgegenhaltungen:
- DE-A1- 102014 109 160
- DE-A1- 3 827 251
- US-A- 3 829 019
- US-A- 4 219 155

## Beschreibung

Die vorliegende Erfindung betrifft eine Reinigungsvorrichtung gemäß dem Oberbegriff des Anspruchs 1.

Derartige aus dem Stand der Technik, beispielsweise aus der DE 10 2014 109 160 A1 bekannte Reinigungsvorrichtungen, die unter hohen Fluiddrücken von bis zu 1800 bar betrieben werden, weisen üblicherweise eine Eingangshohlwelle und eine oder mehrere mit der Eingangshohlwelle fluidisch verbundene Ausgangshohlwelle auf. Ein zwischen dem Ausgang der Eingangshohlwelle und dem Eingang der Ausgangshohlwelle vorhandener Druckraum, der im Betrieb mit der unter hohem Druck stehenden Flüssigkeit gefüllt ist, ist innerhalb eines Gehäuses über aus einem weichen Kunststoff oder Gummi geformten Dichtelementen abgedichtet.

Diese Dichtelemente sind dabei so angeordnet, dass die unter hohem Druck stehende Flüssigkeit sowohl gegen die Dichtelemente selbst als auch gegen eine axiale Stirnseite der Eingangswelle drückt. Die dadurch auf die Eingangswelle ausgeübte Axialkraft wird durch Axiallager zwischen der Eingangswelle und dem diese umgebenden Gehäuse abgefangen.

Die auf die Dichtelemente wirkende Kraft führt dazu, dass diese in einen zwischen Ausgangswelle und Gehäuse vorhandenen Spalt gedrückt werden, wobei der Spalt die Rotationsbewegung der Ausgangswelle relativ zum Gehäuse ermöglicht. Das Eindrücken von Teilen der Dichtelemente in diesen Spalt führt zum einen zu einer unerwünschten Reibung zwischen Ausgangswelle und Gehäuse. Zum zweiten beschleunigt dies den Verschleiß der Dichtelemente.

Zum Stand der Technik werden weiter die US 4 219 155 A und die US 3 829 019 A genannt.

Aufgabe der vorliegenden Erfindung ist es, eine Reinigungsvorrichtung bereitzustellen, mit der die oben genannten Nachteile beseitigt werden, und insbesondere auf die Eingangswelle durch den hydraulischen Drück verursachte Axialkräfte deutlich reduzierbar bzw. gänzlich vermeidbar sind.

Diese Aufgabe wird durch eine Reinigungsvorrichtung mit den Merkmalen des Anspruchs 1 gelöst.

Die erfindungsgemäße Reinigungsvorrichtung weist eine an eine hydraulische Druckquelle anschließbare, in einem ersten Gehäuseteil aufgenommene, einen Fluidkanal aufweisende Eingangshohlwelle mit wenigstens einem seitlichen oder axialen Eingang und wenigstens einem seitlichen Ausgang auf.

Die Reinigungsvorrichtung weist des Weiteren wenigstens eine mit der Eingangshohlwelle fluidisch gekoppelte, in einem zweiten Gehäuseteil aufgenommene, einen Fluidkanal aufweisende Ausgangshohlwelle auf, die wenigstens einem seitlichen Eingang und wenigstens einen seitlichen oder axialen Ausgang aufweist.

Die Eingangshohlwelle und/oder die Ausgangshohlwelle sind dabei relativ zum jeweiligen Gehäuseteil um ihre Längsachse rotierbar gelagert.

Zumindest zwischen dem Eingang oder Ausgang der Eingangshohlwelle oder dem Eingang der wenigstens einen Ausgangshohlwelle und einem Innenmantel einer Dichtungsbuchse ist eine erste Kammer vorgesehen.

Die Dichtungsbuchse ist orts- und drehfest am jeweiligen Gehäuseteil festgelegt und umschließt ein Teilstück der Eingangshohlwelle oder Ausgangshohlwelle.

Axial sich von der ersten Kammer erstreckende Bereiche des Innenmantels der Dichtungsbuchse bilden mit dem Außenmantel der Eingangshohlwelle oder der Ausgangshohlwelle eine Spaltdichtung.

Eine zweite Kammer ist zwischen einem Außenmantel der Dichtungsbuchse und einer Innenfläche des Gehäuseteils vorgesehen, die über einen Verbindungskanal mit der ersten Kammer verbunden ist und sich axial zur Eingangshohlwelle bzw. Ausgangshohlwelle von dem Verbindungskanal beidseits erstreckt.

Durch die Ausgestaltung dieser Übergänge über Dichtungsbuchsen mit im Mantelinnenbereich vorgesehener erster Kammer wird verhindert, dass die unter hohem Druck stehende Flüssigkeit in Bereiche des Gehäuses insbesondere an senkrecht zur Längsachse der Ein- oder Ausgangswelle ausgerichteten Flächen der Ein- oder Ausgangswelle gelangt, so dass sich dadurch bedingt keine axialen Kräfte beim Austritt des unter hohem Druck stehenden Fluids auf die Eingangs- oder Ausgangshohlwelle ausbilden. Stirnseiten quer zur Längserstreckung der Eingangs- oder Ausgangshohlwelle werden dadurch nicht mehr mit unter Druck stehendem Fluid beaufschlagt, so dass eine Axiallagerung der Eingangs- oder Ausgangshohlwelle dadurch nicht mehr erforderlich ist oder zumindest deutlich kleiner ausgelegt werden kann

Ein weiterer Vorteil der Anordnung der Dichtungsbuchsen besteht darin, dass etwaige Dichtelemente auch unter der hohen Druckbelastung nicht in den die Spaltdichtung bildenden Spalt zwischen Gehäuse und Ein- oder Ausgangshohlwelle drückbar sind, wodurch ein vorzeitiger Verschleiß der Abdichtung sowie durch die Abdichtung verursachte Reibung durch den Einsatz einer solchen Dichtungsbuchse vermieden wird.

Durch die im Mantelaußenbereich vorgesehene zweite Kammer stehen diese Bereiche der Dichtungsbuchse unter dem gleichen hydraulischen Druck wie der Innenbereich des Fluidkanals der Eingangs- oder Ausgangshohlwelle, so dass dadurch bedingt eine Aufweitung des Dichtungsspaltes der Spaltdichtung verhindert wird.

Vorteilhafte Ausführungsvarianten der Erfindung sind Gegenstand der Unteransprüche.

Gemäß einer weiteren vorteilhaften Ausführungsvariante ist die erste Kammer als Materialaussparung am Innenmantel der Dichtungsbuchse und/oder als Materialaussparung an der jeweils benachbarten Mantelfläche der Eingangshohlwelle oder der Ausgangshohlwelle ausgebildet.

Auch die zweite Kammer ist bevorzugt als Materialaussparung am Außenmantel der Dichtungsbuchse und/oder als Materialaussparung an der jeweils benachbarten Mantelfläche der Wandung des Gehäuseteils ausgebildet.

Gemäß einer alternativen vorteilhaften Ausführungsvariante ist die zweite Kammer als einen durch Dichtringe begrenzten Spalt ausgebildet, wobei die Dichtringe in Ringnuten in der Mantelaußenfläche der Dichtungsbuchse vorgesehen sind.

Gemäß einer weiteren bevorzugten Ausführungsvariante der erfindungsgemäßen Reinigungsvorrichtung ist die Eingangshohlwelle mit der wenigstens einen Ausgangshohlwelle über ein mechanisches Getriebe miteinander gekoppelt.

Separate Antriebe für die Eingangshohlwelle und die wenigstens eine Ausgangshohlwelle sind dadurch nicht erforderlich.

Die Spaltdichtung bildet bevorzugt ein fluidisches Lager.

Gemäß einer weiteren bevorzugten Ausführungsvariante ist das erste Gehäuseteil mit dem zweiten Gehäuseteil mechanisch gekoppelt.

Gemäß einer bevorzugten Ausführungsvariante ist die Ausgangshohlwelle um eine zur Drehachse der Eingangshohlwelle senkrechte Drehachse rotierbar, was insbesondere in Zusammenschau mit einer weiteren bevorzugten Ausführungsvariante, bei der der Ausgang der Ausgangshohlwelle in einen Düsenhalter mit sich seitlich zur Längsachse der Ausgangshohlwelle erstreckenden Düsen gekoppelt ist, eine äußerst variable Anordnung der Reinigungsdüsen ermöglicht.

Gemäß einer alternativen Ausführungsvariante ist die wenigstens eine Ausgangshohlwelle um eine zur Drehachse der Eingangshohlwelle parallele Drehachse rotierbar.

Eine solche Variante ermöglicht insbesondere eine breitflächige Reinigung einer zur Drehachse der Eingangshohlwelle und Ausgangshohlwelle senkrechten Fläche.

Die Eingangshohlwelle ist gemäß einer bevorzugten Weiterbildung über Getriebe mit wenigstens zwei parallel zueinander angeordneten Ausgangshohlwellen gekoppelt.

Gemäß einer nochmals weiteren bevorzugten Weiterbildung einer erfindungsgemäßen Reinigungsvorrichtung ist die zweite Kammer der die Ausgangshohlwelle teilweise umhüllenden Dichtungsbuchse fluidisch mit einer im zweiten Gehäuseteil festgelegten Düse gekoppelt.

Die Dichtungsbuchse ist bevorzugt aus einem Lagermetall, vorzugsweise aus Bronze gefertigt.

Nachfolgend werden bevorzugte Ausführungsvarianten der Erfindung anhand der beiliegenden Zeichnungen näher erläutert. Es zeigen:
- Figuren 1 und 2: perspektivische Ansichten einer ersten Ausführungsvariante einer erfindungsgemäßen Reinigungsvorrichtung,
- Figur 3: eine Schnittansicht der in den Figuren 1 und 2 gezeigten Reinigungsvorrichtung,
- Figur 4: eine perspektivische Darstellung einer alternativen Ausführungsvariante einer erfindungsgemäßen Reinigungsvorrichtung und
- Figur 5: eine Schnittdarstellung durch die Reinigungsvorrichtung gemäß Figur 4.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Reinigungsvorrichtung, Eingangshohlwelle, Ausgangshohlwelle, Eingang, Ausgang, Dichtungsbuchse und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

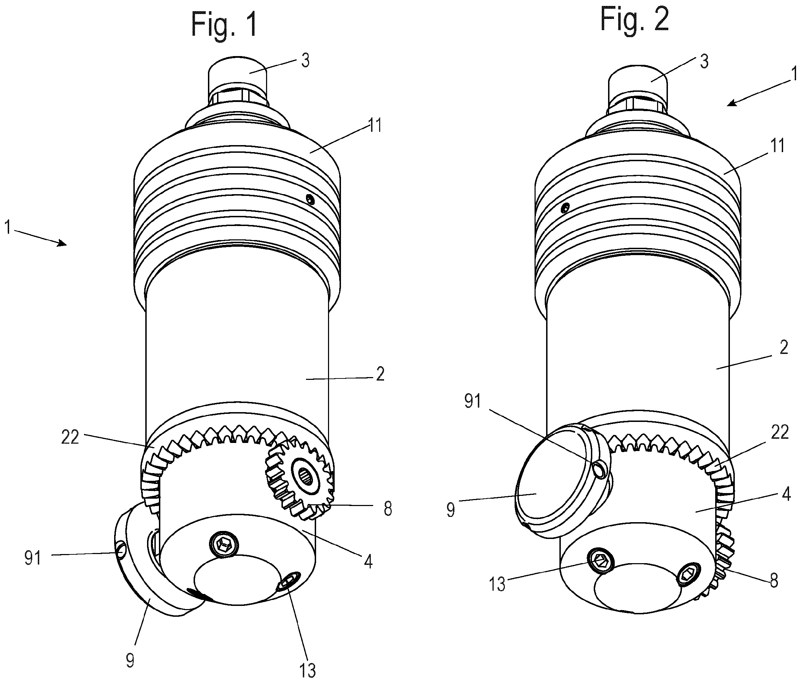

In den Figuren 1 bis 3 ist erste Ausführungsvariante einer erfindungsgemäßen Reinigungsvorrichtung dargestellt. Die Reinigungsvorrichtung ist dabei insgesamt mit dem Bezugszeichen 1 bezeichnet. Eine solche Reinigungsvorrichtung 1 dient dabei beispielsweise der Reinigung der Innenräume von Tankbehältern.

Die Reinigungsvorrichtung 1 weist, wie in den Figuren 1 bis 3 dargestellt, eine an eine hydraulische Druckquelle anschließbare Eingangshohlwelle 3 auf, die in einem ersten Gehäuseteil 2 aufgenommen ist und einen zentralen Fluidkanal 31 zur Durchleitung einer unter Hochdruck von bis zu etwa 1800 bar stehenden Flüssigkeit aufweist.

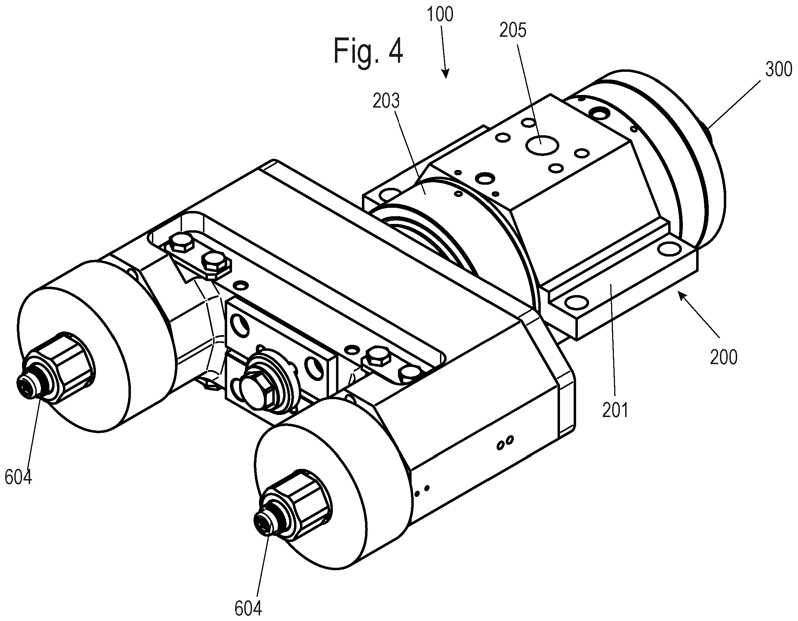

Die Flüssigkeit, beispielsweise eine Wasser-/Reinigungsmittel-Mischung, tritt dabei durch einen in der hier gezeigten Ausführungsvariante axialen Eingang 32 in den Fluidkanal 31 ein. Denkbar ist auch, einen seitlich angeordneten Eingang vorzusehen, der winklig zur Längsachse der Eingangshohlwelle 3 ausgerichtet ist, wie es beispielhaft anhand des in den Figuren 4 bis 5 gezeigten zweiten Ausführungsbeispiels einer erfindungsgemäßen Reinigungsvorrichtung 100 der Fall ist.

Die Eingangshohlwelle 3 weist des Weiteren mehrere seitliche Ausgänge 33 auf. Die seitlichen Ausgänge 33 erstrecken sich in der hier gezeigten Ausführungsvariante radial von dem Fluidkanal 31 weg durch die Wandung der Eingangshohlwelle 3 nach außen und münden in eine erste Kammer 51 einer Dichtungsbuchse 5, die den Bereich der Eingangshohlwelle 3 mit den Ausgängen 33 umschließt.

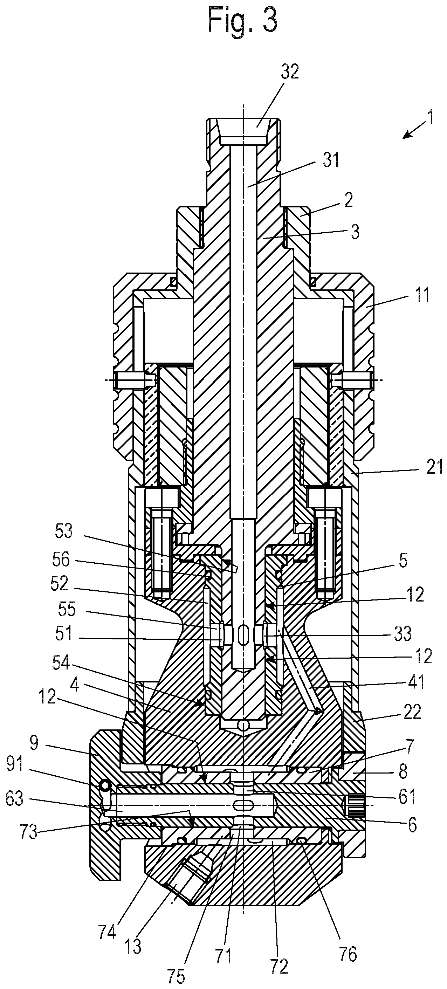

Die Dichtungsbuchse 5 ist, wie in Figur 3 des Weiteren zu erkennen ist, in einem zweiten Gehäuseteil 4 aufgenommen, dessen Innenwandung zusammen mit einem Außenmantel 54 der Dichtungsbuchse 5 eine zweite Kammer 52 begrenzt.

Ein Innenmantel 53 der Dichtungsbuchse 5 bildet dabei mit der Eingangshohlwelle 3 eine Spaltdichtung 12, um eine Drehbewegung der Dichtungsbuchse 5 relativ zur Eingangshohlwelle 3 zu ermöglichen.

In der hier gezeigten Ausführungsvariante ist das Gehäuseteil 4 um die Längsmittelachse der Eingangshohlwelle 3 rotierbar gelagert.

Die erste Kammer 51 der Dichtungsbuchse 5 ist als ringförmige Materialaussparung im Innenmantel 53 der Dichtungsbuchse 5 ausgebildet und entspricht in seiner axialen Breite etwa dem Durchmesser eines sich radial durch den Mantel der Dichtungsbuchse 5 erstreckenden Kanals 55, der in die zweite Kammer 52 mündet.

Die zweite Kammer 52 ist in einen Außenmantel 54 der Dichtungsbuchse 5 eingeformt und bevorzugt als ringförmige Materialaussparung im Außenmantel 54 der Dichtungsbuchse 5 ausgebildet, die zusammen mit der sie umgebenden Wandung des Gehäuseteils 4 einen geschlossenen Ringraum bildet.

Denkbar ist auch, anstelle der zur Ausbildung der ersten und/oder zweiten Kammer 51, 52 vorgesehenen Materialaussparungen nicht bzw. nicht ausschließlich am Innenmantel 53 und/oder Außenmantel 54 der Dichtungsbuchse 5, sondern (auch) an der jeweils benachbarten Mantelfläche der Eingangshohlwelle 3 oder der Wandung des Gehäuseteils 4 vorzusehen.

Denkbar ist außerdem, für die zweite Kammer 54 keine wie oben beschriebene Materialaussparung(en) vorzusehen, sondern die zweite Kammer 54 als einen durch Dichtringe 56 begrenzten Spalt auszubilden, wobei die Dichtringe 56 in Ringnuten in der Mantelaußenfläche 54 der Dichtungsbuchse 5 vorgesehen sind, wie es in Figur 3 beispielhaft dargestellt ist.

Die axial zur Eingangshohlwelle 3 betrachtete Breite dieses Ringraums ist bei dieser Ausführungsvariante vorzugsweise größer als die Breite der ebenfalls als Ringraum ausgebildeten ersten Kammer 51 am Innenmantel der Dichtungsbuchse 5.

Der Kanal 55 oder mehrere der Kanäle 55 münden dabei axial zur Eingangshohlwelle 3 betrachtet zentral in die zweite Kammer 52.

Im Betrieb füllt die unter Hochdruck stehende Flüssigkeit die Kammern 51, 52 und erzeugt dadurch ein Druckgleichgewicht zwischen dem Innenmantel 53 und dem Außenmantel 54 der Dichtungsbuchse 5 im Bereiche der zweiten Kammer 52.

Der Fluiddruck wirkt dabei auf die den Innenmantel 53 der Dichtungsbuchse 5 bildende Fläche der Dichtungsbuchse 5 und damit auf die Spaltdichtung 12, entlang der der Druck abgebaut wird.

Axial zur Eingangshohlwelle 3 betrachtet außerhalb der zweiten Kammer 52 sind Ringnuten in der Mantelaußenfläche 54 der Dichtungsbuchse 5 vorgesehen, die der Aufnahme von Dichtringen 56 zur Abdichtung der Dichtungsbuchse 5 zur Innenwandung des zweiten Gehäuseteils 4 dienen.

In dem zweiten Gehäuseteil 4 ist des Weiteren ein Verbindungskanal 41 zur Durchleitung des unter Hochdruck stehenden Fluids in Richtung einer Ausgangshohlwelle 6 eingebracht.

Dieser Verbindungskanal 41 mündet dabei einerseits in den mit der ersten Kammer 51 fluidisch gekoppelten zweiten Kammer 52 der Dichtungsbuchse 5 und an seinem anderen Ende in einen weiteren zweite Kammer 72, der mit einer weiteren ersten Kammer 71 einer weiteren Dichtungsbuchse 7 fluidisch verbunden ist.

Die vom Aufbau und ihrer Funktion der Dichtungsbuchse 5 entsprechende Dichtungsbuchse 7 umschließt einen Teilbereich einer Ausgangshohlwelle 6, die relativ zur Dichtungsbuchse 7 rotierbar in dem zweiten Gehäuseteil 4 angeordnet ist.

Die Ausgangshohlwelle 6 ist hier um eine zur Drehachse der Eingangshohlwelle 3 senkrechte Drehachse rotierbar in dem zweiten Gehäuseteil 4 aufgenommen.

Die Eingangshohlwelle 3 ist dabei mit der Ausgangshohlwelle 6 über ein mechanisches Getriebe miteinander gekoppelt.

Dazu ist bei der in den Figuren 1 bis 3 gezeigten ersten Ausführungsvariante der Reinigungsvorrichtung 1 an einer dem Eingang 32 entfernten Stirnfläche einer Gehäusewand 21 des Gehäuseteils 2 ein Getriebeelement 22 wie beispielsweise ein Kronenrad oder ein Reibrad festgelegt, das mit einem entsprechenden zweiten Getriebeelement 8, beispielsweise einem an der Ausgangshohlwelle 6 befestigten Getrieberad in Wirkverbindung steht.

Auf der dem zweiten Getriebeelement 8 gegenüberliegenden Ende der Ausgangshohlwelle 6 ist ein Düsenhalter 9 auf die Ausgangshohlwelle 6 aufgesetzt.

Der Düsenhalter 9 weist wenigstens eine, im gezeigten Ausführungsbeispiel mehrere Düsen 91 auf, die sich seitlich zur Längsachse der Ausgangshohlwelle 6 aus dem Düsenhalter 9 nach außen erstrecken.

Wie in den Figuren 1 bis 3 des Weiteren zu erkennen ist, ist es auch denkbar, in einer winklig geneigten Stirnfläche des zweiten Gehäuseteils 4 weitere Düsen 13 anzuordnen, die über einen Verbindungskanal mit der zweiten Kammer 72 der die Ausgangshohlwelle 6 teilweise umhüllenden Dichtungsbuchse 7 fluidisch gekoppelt sind.

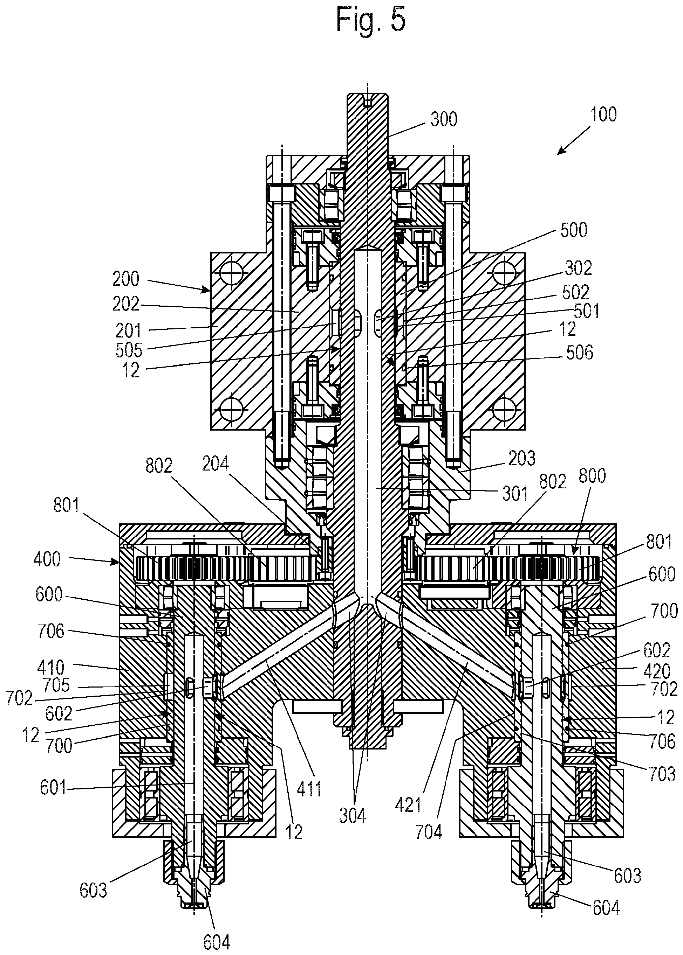

Bei der in den Figuren 4 und 5 gezeigten alternativen Ausführungsvariante einer erfindungsgemäßen Reinigungsvorrichtung 100 sind im Gegensatz zur Reinigungsvorrichtung 1 zwei solcher Ausgangshohlwellen 600 an eine Eingangshohlwelle 300 angeschlossen und fluidisch verbunden.

Die Eingangshohlwelle 300 weist hier einen seitlichen Eingang 302 auf, der mit einem in dem ersten Gehäuseteil 200 vorgesehenen Druckanschluss 205 verbunden ist. Die Eingangshohlwelle 300 ist relativ zum Gehäuseteil 200 um ihre Längsachse rotierbar gelagert.

Im Bereich des Eingangs 302 ist die Eingangshohlwelle 300 von einer Dichtungsbuchse 500 umgeben, die entsprechend der anhand des oben beschriebenen ersten Ausführungsbeispiels eine erste Kammer 501 aufweist, die mit dem Eingang 302 der Eingangshohlwelle 300 fluidisch gekoppelt ist.

Auch die erste Kammer 501 ist über einen Verbindungskanal 505 nach außen mit einer zweiten Kammer 502 verbunden, die sich axial zur Eingangshohlwelle 300 erstreckt.

Im Bereich eines zweiten Endes des Kanals 301 der Eingangshohlwelle 300 teilt sich der Kanal 301 in zwei sich seitlich erstreckende Kanäle 304 auf, die in jeweilige Verbindungskanäle 411, 421 eines ersten Flügels 410 und eines zweiten Flügels 420 eines zweiten Gehäuseteils 400 münden.

Am Ende dieser Verbindungskanäle 411, 421 sind jeweilige Dichtungsbuchsen 700 in dem zweiten Gehäuseteil 400 angeordnet, die Eingangsbereiche einer jeweiligen Ausgangshohlwelle 600 umschließen.

Auch die Dichtungsbuchsen 500, 700 entsprechen prinzipiell im Aufbau und ihrer Funktion der anhand des ersten Ausführungsbeispiels beschriebenen Dichtungsbuchse 5.

Die Ausgangshohlwellen 600 sind in dieser Ausführungsvariante parallel zur Drehachse der Eingangshohlwelle 300 rotierbar gelagert. Dazu ist die Eingangshohlwelle 300 über zwei Getriebe 800 mit den beiden parallel zueinander angeordneten Ausgangshohlwellen 600 gekoppelt.

Jedes der Getriebe 800 weist im hier gezeigten Ausführungsbeispiel ein erstes Getrieberad 801 auf, das die Ausgangshohlwelle 600 umschließt sowie ein zweites Getrieberad 802, das mit einem an der Eingangshohlwelle 300 befestigten Getrieberad 204 kämmt.

Die Ausgänge 603 der Ausgangshohlwellen 600 sind hier axial zum Längskanal 601 der Ausgangshohlwelle 600 ausgerichtet. An die Ausgänge 603 schließen sich jeweilige Düsen 604 an.

Die Spaltdichtungen 12 bilden ein fluidisches Lager. Zudem werden axial wirkende innere Fluiddruckkräfte im Betrieb der Reinigungsvorrichtungen 1, 100 deutlich reduziert, insbesondere vollständig verhindert.

### Bezugszeichenliste

- 1: Reinigungsvorrichtung

- 2: erstes Gehäuseteil
- 21: Gehäusewand
- 22: Getriebeelement

- 3: Eingangshohlwelle
- 31: Kanal
- 32: Eingang
- 33: Ausgang

- 4: zweites Gehäuseteil
- 41: Verbindungskanal

- 5: Dichtungsbuchse
- 51: Erste Kammer
- 52: Zweite Kammer
- 53: Innenmantel
- 54: Außenmantel
- 55: Verbindungskanal
- 56: Dichtring

- 6: Ausgangshohlwelle
- 61: Kanal
- 62: Eingang
- 63: Ausgang

- 7: Dichtungsbuchse
- 71: Erste Kammer
- 72: Zweite Kammer
- 73: Innenmantel
- 74: Außenmantel
- 75: Verbindungskanal
- 76: Dichtring

- 8: Getriebeelement
- 9: Düsenhalter
- 91: Düse

- 11: Außenmantel
- 12: Spaltdichtung

- 100: Reinigungsvorrichtung

- 200: erstes Gehäuseteil
- 201: Befestigungsflansch
- 202: erstes Gehäuseteil
- 203: zweites Gehäuseteil
- 204: Getrieberad
- 205: Druckanschluss

- 300: Eingangshohlwelle
- 301: Kanal
- 302: Eingang
- 303: Ausgang
- 304: Kanal

- 400: zweites Gehäuseteil
- 410: erster Flügel
- 411: Verbindungskanal

- 420: zweiter Flügel
- 421: Verbindungskanal

- 500: Dichtungsbuchse
- 501: Erste Kammer
- 502: Zweite Kammer
- 503: Innenmantel
- 504: Außenmantel
- 506: Dichtring

- 600: Ausgangshohlwelle
- 601: Kanal
- 602: Eingang
- 603: Ausgang
- 604: Düse

- 700: Dichtungsbuchse
- 701: Erste Kammer
- 702: Zweite Kammer
- 703: Innenmantel
- 704: Außenmantel
- 706: Dichtring

- 800: Getriebe
- 801: erstes Getrieberad
- 802: zweites Getrieberad

## Patentansprüche

1. Reinigungsvorrichtung (1, 100), aufweisend
- eine an eine hydraulische Druckquelle anschließbare, in einem ersten Gehäuseteil (2, 200) aufgenommene, einen Fluidkanal (31, 301) aufweisende Eingangshohlwelle (3, 300) mit wenigstens einem seitlichen oder axialen Eingang (32, 302) und wenigstens einem seitlichen Ausgang (33, 303),
- wenigstens eine mit der Eingangshohlwelle (3, 300) fluidisch gekoppelte, in einem zweiten Gehäuseteil (4, 400) aufgenommene, einen Fluidkanal (61, 601) aufweisende Ausgangshohlwelle (6, 600) mit wenigstens einem seitlichen Eingang (62, 602) und wenigstens einem seitlichen oder axialen Ausgang (63, 603),
- wobei die Eingangshohlwelle (3, 300) und/oder die Ausgangshohlwelle (6, 600) relativ zum jeweiligen Gehäuseteil (2, 200, 4, 400) um ihre Längsachse rotierbar gelagert ist,
- wobei zumindest zwischen dem Eingang (32, 62, 302, 602) oder Ausgang (33, 63, 303, 603) der Eingangshohlwelle (3, 300) oder dem Eingang (62, 602) der wenigstens einen Ausgangshohlwelle (6, 600) und einem Innenmantel (53, 73, 503, 703) einer Dichtungsbuchse (5, 7, 500, 700) eine erste Kammer (51, 71, 501, 701) vorgesehen ist,
- wobei die Dichtungsbuchse (5, 7, 500, 700) orts- und drehfest am jeweiligen Gehäuseteil (2, 200, 4, 400) festgelegt und ein Teilstück der Eingangshohlwelle (3, 300) oder Ausgangshohlwelle (6, 600) umgreifend angeordnet ist,
- wobei sich axial von der ersten Kammer (51, 71, 501, 701) erstreckende Bereiche des Innenmantels (53, 73, 503, 703) der Dichtungsbuchse (5, 7, 500, 700) mit dem Außenmantel der Eingangshohlwelle (3, 300) oder der Ausgangshohlwelle (6, 600) eine Spaltdichtung (12) bilden
**dadurch gekennzeichnet, dass**
- eine zweite Kammer (52, 72, 502, 702) zwischen einem Außenmantel (54, 74, 504, 704) der Dichtungsbuchse (5, 7, 500, 700) und einer Innenfläche des Gehäuseteils (2, 200, 4, 400) vorgesehen ist, die über einen Verbindungskanal (55, 75) mit der ersten Kammer (51, 71, 501, 701) verbunden ist und sich axial zur Eingangshohlwelle (3, 300) bzw. Ausgangshohlwelle (6, 600) von dem Verbindungskanal (55, 75) beidseits erstreckt.

2. Reinigungsvorrichtung (1, 100) nach Anspruch 1, **dadurch gekennzeichnet, dass** die erste Kammer (51, 71, 501, 701) als Materialaussparung am Innenmantel (53, 73, 503, 703) der Dichtungsbuchse (5, 7, 500, 700) und/oder als Materialaussparung an der jeweils benachbarten Mantelfläche der Eingangshohlwelle (3, 300) oder der Ausgangshohlwelle (6, 600) ausgebildet ist.

3. Reinigungsvorrichtung (1, 100) nach einem der vorhergehenden Ansprüche, **dadurch gekennzeichnet, dass** die zweite Kammer (52, 72, 502, 702) als Materialaussparung am Außenmantel (54, 74, 504, 704) der Dichtungsbuchse (5, 7, 500, 700) und/oder als Materialaussparung an der jeweils benachbarten Mantelfläche der Wandung des Gehäuseteils (4, 200, 400) ausgebildet ist.

4. Reinigungsvorrichtung (1, 100) nach Anspruch 1 oder 2, **dadurch gekennzeichnet, dass** die zweite Kammer (52, 72, 502, 702) als einen durch Dichtringe (56, 76, 506, 706) begrenzten Spalt ausgebildet ist, wobei die Dichtringe (56, 76, 506, 706) in Ringnuten in der Mantelaußenfläche (54, 74, 504, 704) der Dichtungsbuchse (5, 7, 500, 700) vorgesehen sind.

5. Reinigungsvorrichtung (1, 100) nach einem der vorhergehenden Ansprüche, **dadurch gekennzeichnet, dass** ein Innendurchmesser der Dichtungsbuchse (5, 7, 500, 700) im Bereich der Spaltdichtung (12) beidseits des Verbindungskanals (55, 75) gleich oder nahezu gleich ist.

6. Reinigungsvorrichtung (1, 100) nach einem der vorhergehenden Ansprüche, **dadurch gekennzeichnet, dass** die Eingangshohlwelle (3, 300) mit der wenigstens einen Ausgangshohlwelle (6, 600) über ein mechanisches Getriebe (8, 800) miteinander gekoppelt ist.

7. Reinigungsvorrichtung (1, 100) nach einem der vorhergehenden Ansprüche, **dadurch gekennzeichnet, dass** die Spaltdichtung (12) ein fluidisches Lager bildet.

8. Reinigungsvorrichtung (1) nach einem der vorhergehenden Ansprüche, **dadurch gekennzeichnet, dass** die Ausgangshohlwelle (6) um eine zur Drehachse des ersten Gehäuseteils (2) senkrechte Drehachse rotierbar ist.

9. Reinigungsvorrichtung (100) nach einem der vorhergehenden Ansprüche 1 bis 7, **dadurch gekennzeichnet, dass** die wenigstens eine Ausgangshohlwelle (600) um eine zur Drehachse des ersten Gehäuseteils (200) parallele Drehachse rotierbar ist.

10. Reinigungsvorrichtung (1) nach einem der vorhergehenden Ansprüche, **dadurch gekennzeichnet, dass** der Ausgang (63) der Ausgangshohlwelle (6) in einen Düsenhalter (9) mit sich seitlich zur Längsachse der Ausgangshohlwelle (6) erstreckenden Düsen (91) gekoppelt ist.

11. Reinigungsvorrichtung (1) nach einem der vorhergehenden Ansprüche, **dadurch gekennzeichnet, dass** die zweite Kammer (72) der die Ausgangshohlwelle (6) teilweise umhüllenden Dichtungsbuchse (7) fluidisch mit einer im zweiten Gehäuseteil (4) festgelegten Düse (13) gekoppelt ist.

12. Reinigungsvorrichtung (1) nach einem der vorhergehenden Ansprüche, **dadurch gekennzeichnet, dass** die Dichtungsbuchse (7) aus einem Lagermetall, vorzugsweise Bronze gefertigt ist.

## Claims

1. Cleaning device (1, 100), comprising
- a hollow input shaft (3, 300) which can be connected to a hydraulic pressure source, is accommodated in a first housing part (2, 200) and has a fluid channel (31, 301) with at least one lateral or axial input (32, 302) and at least one lateral output (33, 303),
- at least one output hollow shaft (6, 600) fluidically coupled to the input hollow shaft (3, 300), accommodated in a second housing part (4, 400) and having a fluid channel (61, 601) with at least one lateral inlet (62, 602) and at least one lateral or axial outlet (63, 603),
- wherein the input hollow shaft (3, 300) and/or the output hollow shaft (6, 600) is rotatably mounted about its longitudinal axis relative to the respective housing part (2, 200, 4, 400),
- wherein a first chamber (51, 71, 501, 701) is provided at least between the input (32, 62, 302, 602) or output (33, 63, 303, 603) of the input hollow shaft (3, 300) or the input (62, 602) of the at least one output hollow shaft (6, 600) and an inner casing (53, 73, 503, 703) of a sealing bush (5, 7, 500, 700),
- wherein the sealing bush (5, 7, 500, 700) is fixed in position and non-rotatable on the respective housing part (2, 200, 4, 400) and is arranged to embrace a section of the input hollow shaft (3, 300) or output hollow shaft (6, 600),
- wherein regions of the inner casing (53, 73, 503, 703) of the sealing bush (5, 7, 500, 700) extending axially from the first chamber (51, 71, 501, 701) form a gap seal (12) with the outer casing of the input hollow shaft (3, 300) or the output hollow shaft (6, 600),
**characterized in that**
- a second chamber (52, 72, 502, 702) is provided between an outer casing (54, 74, 504, 704) of the sealing bush (5, 7, 500, 700) and an inner surface of the housing part (2, 200, 4, 400), which is connected to the first chamber (51, 71, 501, 701) via a connecting channel (55, 75) and extends axially to the input hollow shaft (3, 300) or output hollow shaft (6, 600) from the connecting channel (55, 75) on both sides.

2. Cleaning device (1, 100) according to claim 1, **characterized in that** the first chamber (51, 71, 501, 701) is designed as a material recess on the inner casing (53, 73, 503, 703) of the sealing bush (5, 7, 500, 700) and/or as a material recess on the respectively adjacent casing surface of the input hollow shaft (3, 300) or the output hollow shaft (6, 600).

3. Cleaning device (1, 100) according to one of the preceding claims, **characterized in that** the second chamber (52, 72, 502, 702) is designed as a material recess on the outer casing (54, 74, 504, 704) of the sealing bush (5, 7, 500, 700) and/or as a material recess on the respectively adjacent casing surface of the wall of the housing part (4, 200, 400).

4. Cleaning device (1, 100) according to claim 1 or 2, **characterized in that** the second chamber (52, 72, 502, 702) is designed as a gap delimited by sealing rings (56, 76, 506, 706), wherein the sealing rings (56, 76, 506, 706) are provided in annular grooves in the outer casing surface (54, 74, 504, 704) of the sealing bush (5, 7, 500, 700).

5. Cleaning device (1, 100) according to one of the preceding claims, **characterized in that** an inside diameter of the sealing bush (5, 7, 500, 700) in the region of the gap seal (12) is the same or virtually the same on both sides of the connecting channel (55, 75).

6. Cleaning device (1, 100) according to one of the preceding claims, **characterized in that** the input hollow shaft (3, 300) is coupled to the at least one output hollow shaft (6, 600) via a mechanical transmission (8, 800).

7. Cleaning device (1, 100) according to one of the preceding claims, **characterized in that** the gap seal (12) forms a fluidic bearing.

8. Cleaning device (1) according to one of the preceding claims, **characterized in that** the output hollow shaft (6) can be rotated about an axis of rotation perpendicular to the axis of rotation of the first housing part (2).

9. Cleaning device (100) according to one of the preceding claims 1 to 7, **characterized in that** the at least one output hollow shaft (600) is rotatable about an axis of rotation parallel to the axis of rotation of the first housing part (200).

10. Cleaning device (1) according to one of the preceding claims, **characterized in that** the output (63) of the output hollow shaft (6) is coupled into a nozzle holder (9) with nozzles (91) extending laterally to the longitudinal axis of the output hollow shaft (6).

11. Cleaning device (1) according to one of the preceding claims, **characterized in that** the second chamber (72) of the sealing bush (7) partially enveloping the output hollow shaft (6) is fluidically coupled to a nozzle (13) fixed in the second housing part (4).

12. Cleaning device (1) according to one of the preceding claims, **characterized in that** the sealing bush (7) is made of a bearing metal, preferably bronze.

## Revendications

1. Appareil de nettoyage (1, 100), comprenant :
- un arbre creux d'entrée (3, 300) raccordable à une source de pression hydraulique, logé dans une première partie de boîtier (2, 200) et présentant un canal de fluide (31, 301), avec au moins une entrée latérale ou axiale (32, 302) et au moins une sortie latérale (33, 303),
- au moins un arbre creux de sortie (6, 600) couplé fluidiquement à l'arbre creux d'entrée (3, 300), logé dans une deuxième partie de boîtier (4, 400) et présentant un canal de fluide (61, 601), avec au moins une entrée latérale (62, 602) et au moins une sortie latérale ou axiale (63, 603),
- l'arbre creux d'entrée (3, 300) et/ou l'arbre creux de sortie (6, 600) étant logé de manière rotative autour de son axe longitudinal par rapport à la partie de boîtier respective (2, 200, 4, 400),
- une première chambre (51, 71, 501, 701) étant prévue au moins entre l'entrée (32, 62, 302, 602) ou la sortie (33, 63, 303, 603) de l'arbre creux d'entrée (3, 300) ou l'entrée (62, 602) de l'au moins un arbre creux de sortie (6, 600) et une enveloppe intérieure (53, 73, 503, 703) d'une douille d'étanchéité (5, 7, 500, 700),
- la douille d'étanchéité (5, 7, 500, 700) étant fixée en position et en rotation sur la partie de boîtier respective (2, 200, 4, 400) et étant disposée de manière à entourer une partie de l'arbre creux d'entrée (3, 300) ou de l'arbre creux de sortie (6, 600),
- des zones de l'enveloppe intérieure (53, 73, 503, 703) de la douille d'étanchéité (5, 7, 500, 700) s'étendant axialement depuis la première chambre (51, 71, 501, 701) formant avec l'enveloppe extérieure de l'arbre creux d'entrée (3, 300) ou de l'arbre creux de sortie (6, 600) un joint à fente (12),
**caractérisé en ce que**
une deuxième chambre (52, 72, 502, 702) est prévue entre une enveloppe extérieure (54, 74, 504, 704) de la douille d'étanchéité (5, 7, 500, 700) et une surface intérieure de la partie de boîtier (2, 200, 4, 400), qui est reliée à la première chambre (51, 71, 501, 701) par un canal de liaison (55, 75) et s'étend axialement vers l'arbre creux d'entrée (3, 300) ou l'arbre creux de sortie (6, 600) des deux côtés du canal de liaison (55, 75).

2. Appareil de nettoyage (1, 100) selon la revendication 1, **caractérisé en ce que** la première chambre (51, 71, 501, 701) est réalisée sous forme d'évidement de matériau sur l'enveloppe intérieure (53, 73, 503, 703) de la douille d'étanchéité (5, 7, 500, 700) et/ou sous forme d'évidement de matériau sur la surface d'enveloppe respectivement voisine de l'arbre creux d'entrée (3, 300) ou de l'arbre creux de sortie (6, 600).

3. Appareil de nettoyage (1, 100) selon l'une des revendications précédentes, **caractérisé en ce que** la deuxième chambre (52, 72, 502, 702) est réalisée sous forme d'évidement de matériau sur l'enveloppe extérieure (54, 74, 504, 704) de la douille d'étanchéité (5, 7, 500, 700) et/ou sous forme d'évidement de matériau sur la surface d'enveloppe respectivement voisine de la paroi de la partie de boîtier (4, 200, 400).

4. Appareil de nettoyage (1, 100) selon la revendication 1 ou 2, **caractérisé en ce que** la deuxième chambre (52, 72, 502, 702) est conçue comme une fente délimitée par des bagues d'étanchéité (56, 76, 506, 706), les bagues d'étanchéité (56, 76, 506, 706) étant prévues dans des rainures annulaires dans la surface extérieure de l'enveloppe (54, 74, 504, 704) de la douille d'étanchéité (5, 7, 500, 700).

5. Appareil de nettoyage (1, 100) selon l'une des revendications précédentes, **caractérisé en ce qu'**un diamètre intérieur de la douille d'étanchéité (5, 7, 500, 700) dans la zone du joint à fente (12) est égal ou presque égal des deux côtés du canal de liaison (55, 75).

6. Appareil de nettoyage (1, 100) selon l'une des revendications précédentes, **caractérisé en ce que** l'arbre creux d'entrée (3, 300) est couplé à l'au moins un arbre creux de sortie (6, 600) par l'intermédiaire d'une transmission mécanique (8, 800).

7. Appareil de nettoyage (1, 100) selon l'une des revendications précédentes, **caractérisé en ce que** le joint à fente (12) forme un palier fluidique.

8. Appareil de nettoyage (1) selon l'une des revendications précédentes, **caractérisé en ce que** l'arbre creux de sortie (6) est apte à tourner autour d'un axe de rotation perpendiculaire à l'axe de rotation de la première partie de boîtier (2).

9. Appareil de nettoyage (100) selon l'une des revendications précédentes 1 à 7, **caractérisé en ce que** ledit au moins un arbre creux de sortie (600) est apte à tourner autour d'un axe de rotation parallèle à l'axe de rotation de la première partie de boîtier (200).

10. Appareil de nettoyage (1) selon l'une des revendications précédentes, **caractérisé en ce que** la sortie (63) de l'arbre creux de sortie (6) est couplée dans un portebuses (9) avec des buses (91) s'étendant latéralement à l'axe longitudinal de l'arbre creux de sortie (6).

11. Appareil de nettoyage (1) selon l'une des revendications précédentes, **caractérisé en ce que** la deuxième chambre (72) de la douille d'étanchéité (7) enveloppant partiellement l'arbre creux de sortie (6) est couplé fluidiquement à une buse (13) fixée dans la deuxième partie de boîtier (4).

12. Appareil de nettoyage (1) selon l'une des revendications précédentes, **caractérisé en ce que** la douille d'étanchéité (7) est fabriquée à partir d'un métal antifriction, de préférence du bronze.
